# EUROPEAN PATENT SPECIFICATION

(11) **EP 4 573 764 B1**
(45) Date of publication and mention of the grant of the patent: **15.07.2026**
(21) Application number: 23751645.5
(22) Date of filing: 08.08.2023
(51) Int. Cl.: H04W 4/80, H04W 40/24

(54) **A METHOD FOR MIGRATING NODES IN A DISTRIBUTED NETWORK TO A CENTRALIZED NETWORK**
VERFAHREN ZUR MIGRATION VON KNOTEN IN EINEM VERTEILTEN NETZWERK IN EIN ZENTRALISIERTES NETZWERK
PROCÉDÉ DE MIGRATION DE N UDS DANS UN RÉSEAU DISTRIBUÉ VERS UN RÉSEAU CENTRALISÉ

(30) Priority: 18.08.2022 EP 22190902
(43) Date of publication of application: 25.06.2025
(73) Proprietor: Signify Holding B.V., 5656 AE Eindhoven (NL)
(72) Inventor: SHARMA, Sahil, 5656 AE Eindhoven (NL); KUMAR, Shankaran, Sandeep, 5656 AE Eindhoven (NL)
(74) Representative: Verweij, Petronella Daniëlle
(86) International application number: PCT/EP2023/071884
(87) International publication number: WO 2024/037924

(56) References cited:
- EP-B1- 2 661 127
- WO-A1-2011/083389
- US-A1- 2021 185 485
- US-B2- 9 015 823

## Description

### FIELD OF THE INVENTION

The invention relates to the field of wireless communication. More particularly, various methods, apparatus, and systems are disclosed herein related to migrating nodes among two different wireless networks.

### BACKGROUND OF THE INVENTION

Zigbee, Thread and Bluetooth Mesh are examples of wireless network that are targeted at IoT applications such as lighting and building automation. They provide a low latency, low-rate service that enables messages to be passed between, for example, a light switch and one or more luminaires. Mesh networking provides great flexibility and scalability to the system. However, on the other hand, a centralized Zigbee network offers improved security and control over the network, which is also attractive in many applications. Thus, there is a need to migrate an existing distributed network to a centralized network in a reliable manner.

Some communication standards, such as a Zigbee standard, support both distributed and centralized network architectures. Such standards may also define how the distributed and centralized networks can be formed from scratch. But there is no well-defined way to move an existing distributed network to a centralized one without having to redeploy the entire network. Furthermore, it may also be desirable that the transition can be implemented on-the-fly with reduced impact on the functionality of the network.

US2021185485A1 is related to a system for selecting one or more devices in a wireless network for presence and/or location detection, and the system comprising a processor configured to determine a suitability of each of a plurality of devices for transmitting, receiving and/or processing a radio frequency signal for presence and/or location detection while leaving sufficient resources for network communication.

EP2661127B1 is related to a controlling device of an autonomous routing area network comprising a processing unit configured to perform acts comprising: receiving a request from a requesting device to join the autonomous routing area network; and in response to receiving the request: determining, based on information included in the request, whether the requesting device is an isolated device, wherein the requesting device is an isolated device if it is incapable of joining networks other than the autonomous routing area network; controlling a rejection or acceptance of admission of the requesting device to the autonomous routing area network based on whether the requesting device is an isolated device.

### SUMMARY OF THE INVENTION

In the distributed network, some nodes are end nodes or leaf nodes, which rely on other nodes (router nodes or parent nodes) to relay messages to them. One problem may arise during the transition from a distributed network to a centralized network is that if those router nodes or parent nodes leave the distributed network earlier than the end nodes and/or leaf nodes, those end nodes and/or leaf nodes may lose the connection to the distributed network without being informed about the transition and then become unreachable.

It is recognized by the inventor that it is beneficial to regulate the network migration procedure by taking topology information into account. More particularly, the goal of this invention is achieved by a method as claimed in claim 1, and by a bridge device as claimed in claim 12.

In accordance with a first aspect of the invention a method for migrating two or more nodes in a distributed wireless network to a centralized wireless network is provided. The method comprises the steps of sending one or more parameters related to the centralized wireless network by a first bridge device in the centralized wireless network to a second bridge device in the distributed wireless network; collecting topology information among the two or more nodes by querying the two or more nodes in the distributed wireless network; determining a sequence list for requesting the two or more nodes to join the centralized wireless network based on the topology information; requesting the two or more nodes to join the centralized wireless network according to the sequence list; wherein the sequence list is arranged to allow a first node out of the two or more nodes to join the centralized wireless network earlier than a second node out of the two or more nodes when the first node receives a message from the second bridge device via a relay of the second node in the distributed wireless network.

The one or more parameters may be related to a network ID of the centralized network, an operation channel of the centralized network, or another network parameter related to the centralized network.

The topology information may be collected by obtaining neighboring information related to each individual node, such as a list of its neighbours with one hop direct link, an output power used for establishing a link with a neighbour node, a received power from a neighbour node, or a link quality information related to a link with another node.

Thus, the topology information may be related to the physical deployment of the nodes in the system. The topology information may also be related to the network construction of the distributed network, such as which nodes are allocated as router nodes and which nodes are allocated as end nodes or non-routing nodes. For example, an end node may receive information from a router node, but not from another end node.

The sequence list is used to sort out the nodes for a reliable migrating from the distributed network to the centralized network to avoid a node left unreachable in the distributed network due to a router node or a parent node connected to it leaving the distributed network early.

Beneficially, the method further comprising the step of providing information related to the two or more nodes by the second bridge device to the first bridge device.

The second bridge device may provide information related to an individual node to the first bridge device to further assist the first bridge device in setting up the centralized network.

Alternatively, the first bridge device may join the distributed network before it opens the new centralized network. And then, the first bridge device may collect such information by itself.

However, since the second bridge device may have collected such information during its normal data communication in the distributed network, it may be more efficient that such information is provided to the first bridge device by the second bridge device directly.

Advantageously, the method further comprising the step of providing the sequence list by the second bridge device to the first bridge device.

The second bridge device may request the nodes to join the centralized network according to the sequence list. And in parallel, the second bridge device may also inform the first bridge device about the list. And then accordingly, the first bridge device will also follow the list to allow nodes to join the centralized network sequentially.

Alternatively, upon determining the sequence list by the second bridge device, it may also simply provide the sequence list to the first bridge device allowing the first bridge device to request the nodes to join the centralized network. This may be achieved if the first bridge device can stay in the distributed network and the centralized network simultaneously. And then the first bridge device may send requests in the distributed network to the nodes sequentially according to the list, and at the same time allow the nodes to join in the centralized network. A further option is that upon obtaining the sequence list, the first bridge device may first stay in the distributed network to send requests to the nodes sequentially and specifying in the requests delay periods for each node to join the new centralized network. And then the new bridge device can leave the distributed network and open the centralized network to allow nodes to join.

In one example, the method further comprising the step of opening the centralized wireless network by the first bridge device for nodes to join.

As disclosed above, the step of opening the centralized wireless network by the first bridge device may be carried out before the transition procedure, such that the first bridge device opens the centralized wireless network and then informs the second bridge device about the one or more configuration parameters of the new centralized wireless network.

Alternatively, the step of opening the centralized wireless network by the first bridge device may be carried out during the transition procedure, such that the first bridge device determines the one or more configuration parameters of the new centralized wireless network to be created and informs the second bridge device about such parameters. The actual step of opening the centralized wireless network may be executed during or after the two or more nodes being requested to join the centralized network.

Preferably, the method further comprising the step of communicating by the second bridge device the one or more parameters related to the centralized wireless network to the two or more nodes.

This step may also be combined with the step of requesting the two or more nodes to join the centralized wireless network.

Alternatively, it may also be an option that the first bridge device joins the distributed network and communicate the one or more parameters related to the centralized wireless network directly to the two or more nodes.

Beneficially, the information related to the two or more nodes comprises at least one of an address, a configuration parameter, and a state information related to the two or more nodes.

Advantageously, the method further comprising the step of restoring a node out of the two or more nodes in the centralized wireless network to a state that the node was in the distributed wireless network previously.

By knowing a configuration, a setting, a state, or a scene of an individual node in the distributed network, the first bridge device or the new bridge device may restore the node to the previous configuration, setting, state, or scene after the node moving to the new centralized network, which further enhances a smooth transition.

In a preferred embodiment, the method further comprising the step of generating a link key for a node out of the two or more nodes in the centralized wireless network based on the information obtained from the second bridge device; and informing the node about the link key.

Upon receiving information related to an individual node, such as an identifier or address of the node, an end-to-end link key may be generated by the first bridge device for that individual node. The end-to-end link key may be used to improve the security of the end to end communication in the centralized network.

This step may be carried out by the first bridge device of the centralized network, such that the first bridge device informs individual nodes about their dedicated link key.

Note that it may also be an option that the first bridge device joins the distributed network and collects information related to the two or more nodes by the first bridge device itself.

In one example, the sequence list is arranged to allow a first node out of the two or more nodes to join the centralized wireless network earlier than a second node out of the two or more nodes when the first node receives a message from the second bridge device via a relay of the second node in the distributed wireless network.

The sequence list is arranged to avoid a situation that a critical node, e.g., a node that is the only link between two subparts of the network, moves to the new centralized network earlier than other nodes, which will leave some nodes unreachable in the distributed network to get informed about this transition. For example, a router node or a parent node will leave the distributed network later than an end node or a child node that relying on it for getting access to the distributed network.

Beneficially, at least one of the distributed wireless network and the centralized wireless network is according to a Zigbee standard.

Zigbee standard is widely adopted in home automation and lighting control applications. The Zigbee network layer natively supports both star and tree networks, and generic mesh networking. The powerful topology control provides it great flexibility in a control system, especially for reaching destination nodes that are far away from a source node with direct link.

ZigBee specifies three different device types: the ZigBee Coordinator (ZC), the ZigBee Router (ZR), and the ZigBee End Device (ZED). These three devices play different roles in a ZigBee network. A Zigbee Router (ZR) passes data between devices and/or the coordinator. A Zigbee End Device (ZED) provides only basic functionality. ZEDs are leaf nodes. They communicate only through their parent nodes and, unlike router devices, cannot relay messages intended for other nodes. They don't participate in any routing. End devices rely on their parent routers to send and receive messages. Regarding IEEE 802.15.4, ZC and ZR are fully functional devices (FFDs), whereas the ZEDs are reduced function devices (RFDs).

Thus, the topology information among the two or more nodes in a distributed wireless network may be determined jointly by the physical location of the nodes, the functionalities supported by the nodes, and the type of roles they play in the distributed network.

Advantageously, the first bridge device and the second bridge device are physically co-located.

The first bridge device and the second bridge may be deployed next to each other in proximity, such as within a direct wireless communication range. It may also be the case that the first bridge device and the second bridge device are co-located, such that the first bridge device is to be replaced by the second bridge device after migration. Physically, it may also be possible that the first bridge device and the second bridge device are the same bridge device. It applies equally to a situation where an existing bridge device that, through a firmware update, has the capability to transition to a centralized network. All these steps would simply be carried out on the same bridge device to move its network from a distributed topology to a centralized topology.

Preferably, the first bridge device and the second bridge device have a further communication channel, not belonging to either the distributed wireless network or the centralized wireless network, connecting each other.

The further communication channel may be either a wired channel or a wireless channel. For example, the first bridge device and the second bridge device may be connected via an IP network, e.g., Ethernet. The first bridge device and the second bridge device may also be connected via Wi-Fi network, a BLE link, or a 4g/5G cellular link.

In accordance with a second aspect of the invention a bridge device is provided. A bridge device for use in a distributed wireless network comprises a communication interface configured to receive one or more parameters related to a centralized wireless network from another bridge device; a radio configured to collect topology information among the two or more nodes by querying two or more nodes on the distributed wireless network; and a controller configured to determine a sequence list for requesting the two or more nodes to join the centralized wireless network based on the topology information; wherein the radio is further configured to request the two or more nodes to join the centralized wireless network according to the sequence list; wherein the sequence list is arranged to allow a first node out of the two or more nodes to join the centralized wireless network earlier than a second node out of the two or more nodes, when the first node received a message from the bridge device via a relay of the second node in the distributed wireless network.

The entire procedure of migrating nodes to the centralized network may be initiated by the new bridge device of the centralized network, which first sends one or more parameters related to a centralized wireless network to the existing bridge device in the distributed network. The one or more parameters may comprise a network identifier (ID) of the centralized network, an operation channel of the centralized network, or another network parameter related to the centralized network. And then, the bridge device or the existing bridge device in the distributed wireless network may take charge of the main responsibility in arranging a smooth transition. Topology information is used for determining the sequence list to ensure that no nodes are left unreachable in the distributed network during the transition. The topology information may be collected by the existing bridge device by querying the nodes triggered by the migrating procedure. It may also be the case that the existing bridge device collects the topology information on a regular basis during earlier data communication in the distributed network. Based on the topology information, the existing bridge device determines the sequence list and requests the nodes to join the centralized network according to the sequence list.

Advantageously, the sequence list is arranged to allow a first node out of the two or more nodes to join the centralized wireless network earlier than a second node out of the two or more nodes, when the first node received a message from the bridge device via a relay of the second node in the distributed wireless network.

Beneficially, the communication interface of the bridge device is further configured to send information related to the two or more nodes to the other bridge device.

The existing bridge device may also provide further information related to an individual node, such as its address, a configuration parameter, or a state of the node in the distributed network. Such information may help the new bridge device to restore the node to a previous state or configuration after the node moving to the new centralized network. The information may also be used to generate dedicated link key to secure an end-to-end communication link.

### BRIEF DESCRIPTION OF THE DRAWINGS

In the drawings, like reference characters generally refer to the same parts throughout the different figures. Also, the drawings are not necessarily to scale, emphasis instead generally being placed upon illustrating the principles of the invention.
FIG. 1 shows a possible system setup;
FIG. 2 shows a flow-chart of the method for migrating two or more nodes in a distributed wireless network to a centralized wireless network;
FIG. 3 shows a block diagram of a bridge device for use in a distributed wireless network; and
FIG. 4 illustrates an example of a bridge device.

### DETAILED DESCRIPTION OF EMBODIMENTS

The embodiments set forth below represent information to enable those skilled in the art to practice the embodiments. Upon reading the following description in light of the accompanying drawings, those skilled in the art will understand the concepts of the disclosure and will recognize applications of these concepts not particularly addressed herein. It should be understood that these concepts and applications fall within the scope of the disclosure.

For wireless communication, a distributed network topology provides improved flexibility and scalability. However, it may also run the risk of compromised security. To take Zigbee as an example, there are well-known weaknesses in the distributed Zigbee network, especially during the joining process. In order to provide better security, it is appealing to move to a centralized network which has additional secure joining mechanisms. Although the Zigbee standard defines how distributed and centralized networks can be formed from scratch, there is no well-defined way to move or migrate an existing distributed network to a centralized one without having to redeploy the entire network. From a user experience point of view, it is important to be able to make this transition with minimal user intervention and disturbances to the network. Preferably, the transition can be implemented on-the-fly.

One way is to use the Zigbee Commissioning Cluster (ZCC), which essentially defines messages that can be sent to individual nodes in the network, with information such as the Zigbee PAN-ID, Extended PAN ID, network and Link keys, etc. of the centralized network to join. It also defines a message which instructs the node to restart and join the new network. Upon restart, the node joins the new network using the more secure centralized joining mechanism defined in Zigbee and is also "aware" that it is now part of a centralized network.

Another way is to define customized messages that essentially perform a subset of what ZCC does. In its simplest form, a simple restart and re-join message may be sent to the node, which would make the node search for new networks, and then find the centralized network and join it.

Regardless of the method used, nodes need to be nudged into leaving the existing distributed network for joining the new centralized one. The known methods demonstrate how to move a single node from a distributed network to a centralized network. However, a process/method to reliably migrating every node in a distributed network to a centralized network is still lacking. As an example, a problem that could arise is that if a critical node, e.g., a node that is the only link between two subparts of the network, moves to the new centralized network earlier than other nodes, which will leave some nodes unreachable in the distributed network to get informed about this transition. A workaround is that the Extended PAN-ID, PAN-ID, network key, and etc., may be kept the same for both existing distributed network and the new centralized network. However, such a workaround may lead to some unexpected confusion for the nodes.

The present invention tackles the issue in a more generalized way where the centralized network can be completely independent, with fresh network parameters, such as the PAN-ID, network key, etc. This also provides improved security as the new centralized network is free to choose a fresh new key, and hence the new centralized network starts as if it were built from scratch.

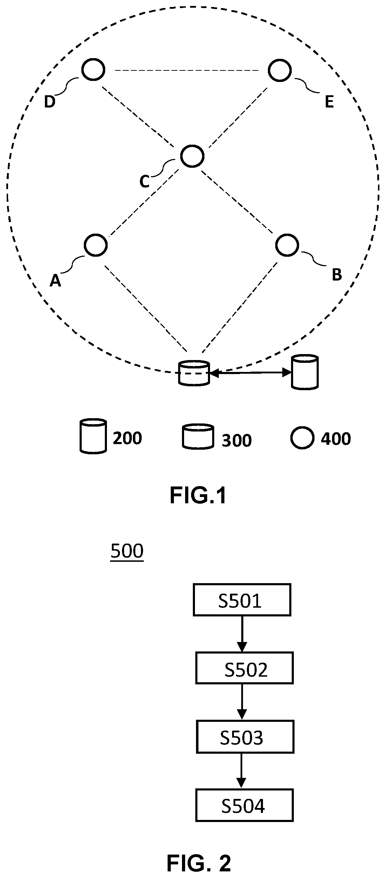

FIG. 1 shows a possible system setup where an existing bridge device 300 and a new bridge device 200 are located in close proximality or even co-located. According to a Zigbee protocol, a conventional mechanism to migrate nodes from an existing distributed network to a new centralized network is to communicate the existing Zigbee network parameters (PAN-ID, network key, etc.) and other information related to the distributed network to the new bridge device 200. This information may be encrypted and communicated over a wired connection, such as via an IP network, or a wireless connection between the existing bridge device 300 and the new bridge device 200. The wireless connection may be based on another wireless communication protocol that is different from either the existing distributed network or the new centralized network, such as Wi-Fi, BLE, or 4G/5G cellular.

FIG. 1 also highlights that a problem may arise if the existing bridge device 300 would naively instruct nodes (A to E) to sequentially switch to join the new bridge device 200 in centralized mode (either by issuing Zigbee Commissioning Cluster commands or simpler custom commands). Once node C leaves the distributed network, nodes D and E will no longer be reachable.

Therefore, a new scheme is required to solve this problem. As one example to implement the proposed solution, the steps involved may be as follows:
a) The new bridge device 200 starts up in a centralized mode and selects network parameters, such as PAN-ID, Extended PAN-ID, operation frequency channel, etc. It also selects, at random, a network key for the new centralized network. It may also open its network for centralized joins immediately.
b) The new bridge device 200 communicates PAN-ID, Extended PAN-ID, operation frequency channel to the existing bridge device 300 with a request to transfer nodes or devices to it. The new bridge 200 may not communicate its network key to the existing bridge device 300 as this is not necessary and is not desirable from security perspective.
c) The existing bridge device 300 may be triggered by the request from the new bridge device 200 to ping the different nodes for topology information. It may also be that the existing bridge device 300 pings the different nodes for topology information on a periodic basis, such as during a regular communication for the distributed network. The topology information may include neighboring information of a node, such as its direct communication links/neighbours, transmission power for establishing a link to a neighbour node, received signal strength from a neighbour node, etc. Based on the topology information obtained in this step, the existing bridge has an overview of the network topology.
d) Based on the topology information gathered in the previous step, the existing bridge device 300 determines a sequence list for requesting the two or more nodes to join the centralized wireless network based on the topology information, and then begins to ask the nodes to join the centralized network according to the sequency list. As an example, in a network as illustrated in FIG. 1, the existing bridge device 300 may first ask nodes D and E to join the new bridge 200, followed by node C, and then followed by node A and B. This order would ensure that all the nodes in the network receive the message to move over to the centralized network.
e) In order to send these messages to the node, the existing bridge device 300 may use the ZCC commands, conveying the PAN-ID, Extended PAN-ID, the operation frequency channel, etc., of the new centralized network for the nodes to join. For nodes from a different vendor, which may not have implemented ZCC commands, the existing bridge device 300 could also issue a customized simple command (e.g., Leave request) to request the nodes to leave the existing distributed network and, subsequently, look for the new centralized network to join.
f) The existing bridge device 300 keeps a list of identifies or addresses (e.g., IEEE addresses) of the nodes it has already requested to join the centralized network and passes this list, along with other information, such as nodes' current settings and status (e.g., for a luminaire, it can be on/off, colour temperature status), to the new bridge device 200.
g) The new bridge 200 makes use of the information obtained in the previous step to successfully make nodes join in centralized mode. The list obtained in the previous step, for instance, could help it obtain further information derived from install codes, possibly from a backend server, to obtain link keys to make these nodes successfully join in a centralized network.
h) Once all required nodes have joined the new centralized network, the new bridge device 200 uses information obtained in step f) to return the nodes to the settings or states (on/off, colour, etc.) that they were previously in.

The topology information may include its links/neighbours, transmit/receive power, etc. Based on the topology information, the existing or new bridge device can derive an overview of the network topology among the plurality of nodes.

FIG. 2 shows a flow-chart of the method 500 for migrating two or more nodes in a distributed wireless network to a centralized wireless network. The method 500 comprises the steps of: sending in step S501 one or more parameters related to the centralized wireless network by a first bridge device 200 in the centralized wireless network to a second bridge device 300 in the distributed wireless network; collecting in step S502 topology information among the two or more nodes 400 by querying the two or more nodes 400 in the distributed wireless network; determining in step S503 a sequence list for requesting the two or more nodes 400 to join the centralized wireless network based on the topology information; and requesting in step S504 the two or more nodes 400 to join the centralized wireless network according to the sequence list.

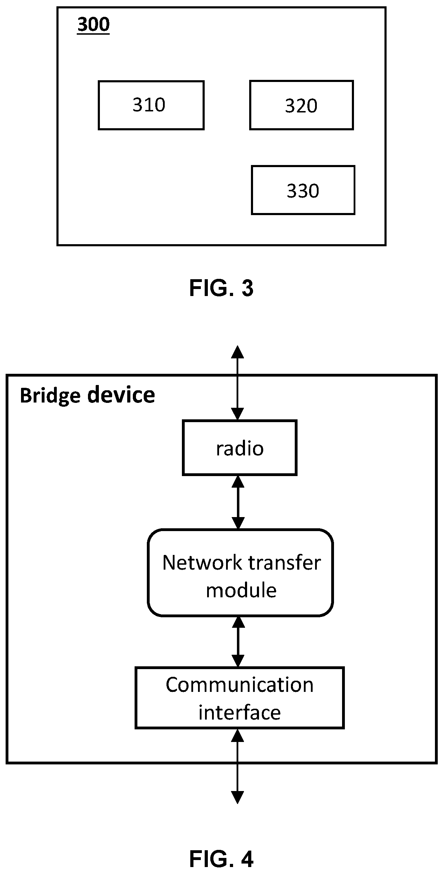

FIG. 3 shows a block diagram of a bridge device 300 for use in a distributed wireless network. As a basic setup, the bridge device 300 comprises a communication interface 310, a radio 320 and a controller 330. The communication interface 310 is configured to receive one or more parameters related to a centralized wireless network from another bridge device 200. The radio 320 is configured to collect topology information among the two or more nodes 400 by querying two or more nodes 400 on the distributed wireless network. The controller 330 is configured to determine a sequence list for requesting the two or more nodes 400 to join the centralized wireless network based on the topology information. The radio 320 is further configured to request the two or more nodes 400 to join the centralized wireless network according to the sequence list.

As an example, the invention may be implemented by a network transfer module in a bridge device, as shown in FIG. 4. The network transfer module may be realized in the controller of the bridge device. In the existing bridge device, the network transfer module gets the parameters related to the new centralized network from the new bridge device 200, in step b) mentioned above, and a request to transfer the nodes or devices from the existing distributed network to the new centralized network. Accordingly, the network transfer module may control the radio to carry out step c), such as to query nodes for topology information. It may also be possible that the network transfer module obtains the topology information from the bridge's internal database, which is collected previously during regular communication with the nodes. Based on the collected topology information, the network transfer module calculates in step d) to generate an appropriate sequence list for migrating the nodes to the new bridge device. The network transfer module then continues to monitor the transfer by querying via the radio of the bridge device, and optionally by receiving additional status response from the new bridge device.

In the new bridge device, the network transfer module may be responsible for starting up the new centralized network as in step a) and control the communication interface to transfer the parameters related to the new centralized network to the existing bridge device in step b). After the existing bridge device has provided the sequence list and information related to the two or more nodes, the network control module of the new bridge device controls its radio to allow the nodes to join according to the sequence list and makes use of the information related to the two or more nodes to restore the nodes to a previous setting, state or scene in the distributed network. Additionally, it may control the communication interface to inform the existing bridge device about the status of the transfer.

Note that the invention applies equally to a situation where an existing bridge device that, through a firmware update, has the capability to transition to a centralized network. All these steps would simply be carried out on the same bridge device to move its network from a distributed topology to a centralized topology.

The method according to the present invention may be implemented on a computer as a computer implemented method, or in dedicated hardware, or in a combination of both.

## Claims

1. A method (500) for migrating two or more nodes (400) in a distributed wireless network to a centralized wireless network, the method (500) comprising the steps of:
- sending (S501) one or more parameters related to the centralized wireless network by a first bridge device (200) in the centralized wireless network to a second bridge device (300) in the distributed wireless network;
- collecting (S502) topology information among the two or more nodes (400) by querying the two or more nodes (400) in the distributed wireless network;
- determining (S503) a sequence list for requesting the two or more nodes (400) to join the centralized wireless network based on the topology information;
- requesting (S504) the two or more nodes (400) to join the centralized wireless network according to the sequence list;
wherein the sequence list is arranged to allow a first node out of the two or more nodes (400) to join the centralized wireless network earlier than a second node out of the two or more nodes (400) when the first node receives a message from the second bridge device (300) via a relay of the second node in the distributed wireless network.

2. The method (500) of claim 1 further comprising:
- providing information related to the two or more nodes (400) by the second bridge device (300) to the first bridge device (200).

3. The method (500) of claim 1 or 2 further comprising:
- providing the sequence list by the second bridge device (300) to the first bridge device (200).

4. The method (500) of any one of previous claims further comprising:
- opening the centralized wireless network by the first bridge device (200) for nodes (400) to join.

5. The method (500) of any one of previous claims further comprising:
- communicating by the second bridge device (300) the one or more parameters related to the centralized wireless network to the two or more nodes (400).

6. The method (500) of any one of previous claims 2-5, wherein the information related to the two or more nodes (400) comprises at least one of an address, a configuration parameter, and a state information related to the two or more nodes (400).

7. The method (500) of any one of previous claims 2-6 further comprising:
- restoring a node out of the two or more nodes (400) in the centralized wireless network to a state that the node was in the distributed wireless network previously.

8. The method (500) of any one of previous claims 2-7 further comprising:
- generating a link key for a node out of the two or more nodes (400) in the centralized wireless network based on the information obtained from the second bridge device (300); and
- informing the node about the link key.

9. The method (500) of any one of previous claims, wherein at least one of the distributed wireless network and the centralized wireless network is according to a Zigbee standard.

10. The method (500) of any one of previous claims, wherein the first bridge device (200) and the second bridge device (300) are physically co-located.

11. The method (500) of any one of previous claims, wherein the first bridge device (200) and the second bridge device (300) have a further communication channel, not belonging to either the distributed wireless network or the centralized wireless network, connecting each other.

12. A bridge device (300) for use in a distributed wireless network comprising:
- a communication interface (310) configured to receive one or more parameters related to a centralized wireless network from another bridge device (200);
- a radio (320) configured to collect topology information among the two or more nodes (400) by querying two or more nodes (400) on the distributed wireless network; and
- a controller (330) configured to determine a sequence list for requesting the two or more nodes (400) to join the centralized wireless network based on the topology information;
wherein the radio (320) is further configured to request the two or more nodes (400) to join the centralized wireless network according to the sequence list;
wherein the sequence list is arranged to allow a first node out of the two or more nodes (400) to join the centralized wireless network earlier than a second node out of the two or more nodes (400), when the first node received a message from the bridge device (300) via a relay of the second node in the distributed wireless network.

13. The bridge device (300) of claim 12, wherein the communication interface is further configured to send information related to the two or more nodes (400) to the other bridge device (200).

## Patentansprüche

1. Verfahren (500) zum Migrieren von zwei oder mehr Knoten (400) in einem verteilten drahtlosen Netzwerk zu einem zentralisierten drahtlosen Netzwerk, das Verfahren (500) umfassend die Schritte:
- Senden (S501) eines oder mehrerer auf das zentralisierte drahtlose Netzwerk bezogener Parameter durch eine erste Brückenvorrichtung (200) in dem zentralisierten drahtlosen Netzwerk an eine zweite Brückenvorrichtung (300) in dem verteilten drahtlosen Netzwerk;
- Sammeln (S502) von Topologieinformationen unter den zwei oder mehr Knoten (400) durch Abfragen der zwei oder mehr Knoten (400) in dem verteilten drahtlosen Netzwerk;
- Bestimmen (S503) einer Sequenzliste zum Auffordern der zwei oder mehr Knoten (400), dem zentralisierten drahtlosen Netzwerk beizutreten, basierend auf den Topologieinformationen;
- Auffordern (S504) der zwei oder mehr Knoten (400), dem zentralisierten drahtlosen Netzwerk gemäß der Sequenzliste beizutreten;
wobei die Sequenzliste angeordnet ist, um einem ersten Knoten aus den zwei oder mehr Knoten (400) zu ermöglichen, dem zentralisierten drahtlosen Netzwerk früher als ein zweiter Knoten aus den zwei oder mehr Knoten (400) beizutreten, wenn der erste Knoten über ein Relais des zweiten Knotens in dem verteilten drahtlosen Netzwerk eine Nachricht von der zweiten Brückenvorrichtung (300) empfängt.

2. Verfahren (500) nach Anspruch 1, ferner umfassend:
- Bereitstellen von Informationen, die sich auf die zwei oder mehr Knoten (400) beziehen, durch die zweite Brückenvorrichtung (300) an die erste Brückenvorrichtung (200).

3. Verfahren (500) nach Anspruch 1 oder 2, ferner umfassend:
- Bereitstellen der Sequenzliste durch die zweite Brückenvorrichtung (300) an die erste Brückenvorrichtung (200).

4. Verfahren (500) nach einem der vorstehenden Ansprüche, ferner umfassend:
- Öffnen des zentralisierten drahtlosen Netzwerks durch die erste Brückenvorrichtung (200), damit Knoten (400) beitreten können.

5. Verfahren (500) nach einem der vorstehenden Ansprüche, ferner umfassend:
- Kommunizieren, durch die zweite Brückenvorrichtung (300), des einen oder der mehreren Parameter in Bezug auf das zentralisierte drahtlose Netzwerk an die zwei oder mehr Knoten (400).

6. Verfahren (500) nach einem der vorstehenden Ansprüche 2 bis 5, wobei die Informationen, die sich auf die zwei oder mehr Knoten (400) beziehen, mindestens eines von einer Adresse, einem Konfigurationsparameter und Statusinformationen umfassen, die sich auf die zwei oder mehr Knoten (400) beziehen.

7. Verfahren (500) nach einem der vorstehenden Ansprüche 2 bis 6, ferner umfassend:
- Wiederherstellen eines Knotens aus den zwei oder mehr Knoten (400) in dem zentralisierten drahtlosen Netzwerk in einen Zustand, in dem sich der Knoten zuvor in dem verteilten drahtlosen Netzwerk befand.

8. Verfahren (500) nach einem der vorstehenden Ansprüche 2 bis 7, ferner umfassend:
- Erzeugen eines Verbindungsschlüssels für einen Knoten aus den zwei oder mehr Knoten (400) in dem zentralisierten drahtlosen Netzwerk basierend auf den von der zweiten Brückenvorrichtung (300) erhaltenen Informationen; und
- Informieren des Knotens über den Verbindungsschlüssel.

9. Verfahren (500) nach einem der vorstehenden Ansprüche, wobei mindestens eines von dem verteilten drahtlosen Netzwerk und dem zentralisierten drahtlosen Netzwerk einem Zigbee-Standard entspricht.

10. Verfahren (500) nach einem der vorstehenden Ansprüche, wobei die erste Brückenvorrichtung (200) und die zweite Brückenvorrichtung (300) physisch am selben Ort angeordnet sind.

11. Verfahren (500) nach einem der vorstehenden Ansprüche, wobei die erste Brückenvorrichtung (200) und die zweite Brückenvorrichtung (300) einen weiteren Kommunikationskanal aufweisen, der weder zu dem verteilten drahtlosen Netzwerk noch dem zentralisierten drahtlosen Netzwerk gehört und sie miteinander verknüpft.

12. Brückenvorrichtung (300) zur Verwendung in einem verteilten drahtlosen Netzwerk, umfassend:
- eine Kommunikationsschnittstelle (310), die konfiguriert ist, um einen oder mehrere Parameter in Bezug auf ein zentralisiertes drahtloses Netzwerk von einer anderen Brückenvorrichtung (200) zu empfangen;
- ein Funkgerät (320), das konfiguriert ist, um Topologieinformationen unter den zwei oder mehr Knoten (400) durch Abfragen von zwei oder mehr Knoten (400) in dem verteilten drahtlosen Netzwerk zu sammeln; und
- eine Steuerung (330), die konfiguriert ist zum Bestimmen einer Sequenzliste zum Auffordern der zwei oder mehr Knoten (400), dem zentralisierten drahtlosen Netzwerk beizutreten, basierend auf den Topologieinformationen;
wobei das Funkgerät (320) ferner konfiguriert ist, um die zwei oder mehr Knoten (400) gemäß der Sequenzliste aufzufordern, dem zentralisierten drahtlosen Netzwerk beizutreten;
wobei die Sequenzliste angeordnet ist, um einem ersten Knoten aus den zwei oder mehr Knoten (400) zu ermöglichen, dem zentralisierten drahtlosen Netzwerk früher als ein zweiter Knoten aus den zwei oder mehr Knoten (400) beizutreten, wenn der erste Knoten über ein Relais des zweiten Knotens in dem verteilten drahtlosen Netzwerk eine Nachricht von der Brückenvorrichtung (300) empfangen hat.

13. Brückenvorrichtung (300) nach Anspruch 12, wobei die Kommunikationsschnittstelle ferner konfiguriert ist, um Informationen in Bezug auf die zwei oder mehr Knoten (400) an die andere Brückenvorrichtung (200) zu senden.

## Revendications

1. Procédé (500) de migration d'au moins deux nœuds (400) dans un réseau sans fil distribué vers un réseau sans fil centralisé, le procédé (500) comprenant les étapes consistant à :
- envoyer (S501) un ou plusieurs paramètres relatifs au réseau sans fil centralisé par un premier dispositif de pont (200) dans le réseau sans fil centralisé à un second dispositif de pont (300) dans le réseau sans fil distribué ;
- collecter (S502) des informations de topologie parmi les au moins deux nœuds (400) en interrogeant les au moins deux nœuds (400) dans le réseau sans fil distribué ;
déterminer (S503) une liste de séquences permettant de demander aux au moins deux nœuds (400) de rejoindre le réseau sans fil centralisé en fonction des informations de topologie ;
- demander (S504) aux au moins deux nœuds (400) de rejoindre le réseau sans fil centralisé selon la liste de séquences ;
dans lequel la liste de séquences est agencée de manière à permettre à un premier nœud parmi les au moins deux nœuds (400) de rejoindre le réseau sans fil centralisé avant un second nœud parmi les au moins deux nœuds (400) lorsque le premier nœud reçoit un message à partir du second dispositif de pont (300) par l'intermédiaire d'un relais du second nœud dans le réseau sans fil distribué.

2. Procédé (500) selon la revendication 1 comprenant en outre :
- la fourniture, au premier dispositif de pont (200), d'informations relatives aux au moins deux nœuds (400) par le second dispositif de pont (300).

3. Procédé (500) selon la revendication 1 ou 2, comprenant en outre :
- la fourniture, au premier dispositif de pont (200), de la séquence de liste par le second dispositif de pont (300).

4. Procédé (500) selon l'une quelconque des revendications précédentes, comprenant en outre :
- l'ouverture du réseau sans fil centralisé par le premier dispositif de pont (200) afin que les nœuds (400) puissent le rejoindre.

5. Procédé (500) selon l'une quelconque des revendications précédentes, comprenant en outre :
- la communication, par le second dispositif de pont (300), du ou des paramètres relatifs au réseau sans fil centralisé aux au moins deux nœuds (400).

6. Procédé (500) selon l'une quelconque des revendications précédentes 2 à 5, dans lequel les informations relatives aux au moins deux nœuds (400) comprennent au moins l'un parmi une adresse, un paramètre de configuration et des informations d'état relatifs aux au moins deux nœuds (400).

7. Procédé (500) selon l'une quelconque des revendications précédentes 2 à 6, comprenant en outre :
- le rétablissement d'un nœud parmi les au moins deux nœuds (400) dans le réseau sans fil centralisé dans un état où se trouvait précédemment le nœud dans le réseau sans fil distribué.

8. Procédé (500) selon l'une quelconque des revendications précédentes 2 à 7, comprenant en outre :
- la génération d'une clé de liaison pour un nœud parmi les au moins deux nœuds (400) dans le réseau sans fil centralisé en fonction des informations obtenues à partir du second dispositif de pont (300) ; et
- le fait d'informer le nœud concernant la clé de liaison.

9. Procédé (500) selon l'une quelconque des revendications précédentes, dans lequel au moins l'un parmi le réseau sans fil distribué et le réseau sans fil centralisé est conforme à la norme Zigbee.

10. Procédé (500) selon l'une quelconque des revendications précédentes, dans lequel le premier dispositif de pont (200) et le second dispositif de pont (300) sont physiquement colocalisés.

11. Procédé (500) selon l'une quelconque des revendications précédentes, dans lequel le premier dispositif de pont (200) et le second dispositif de pont (300) ont un canal de communication supplémentaire, n'appartenant ni au réseau sans fil distribué ni au réseau sans fil centralisé, les connectant l'un à l'autre.

12. Dispositif de pont (300) destiné à être utilisé dans un réseau sans fil distribué comprenant :
- une interface de communication (310) configurée pour recevoir un ou plusieurs paramètres relatifs à un réseau sans fil centralisé à partir d'un autre dispositif de pont (200) ;
- une radio (320) configurée pour collecter des informations de topologie parmi les au moins deux nœuds (400) en interrogeant au moins deux nœuds (400) sur le réseau sans fil distribué ; et
- un dispositif de commande (330) configuré pour déterminer une liste de séquences permettant de demander aux au moins deux nœuds (400) de rejoindre le réseau sans fil centralisé en fonction des informations de topologie ;
dans lequel la radio (320) est en outre configurée pour demander aux au moins deux nœuds (400) de rejoindre le réseau sans fil centralisé selon la liste de séquences ;
dans lequel la liste de séquences est agencée pour permettre à un premier nœud parmi les au moins deux nœuds (400) de rejoindre le réseau sans fil centralisé avant un second nœud parmi les au moins deux nœuds (400) lorsque le premier nœud reçoit un message à partir du dispositif de pont (300) par l'intermédiaire d'un relais du second nœud dans le réseau sans fil distribué.

13. Dispositif de pont (300) selon la revendication 12, dans lequel l'interface de communication est en outre configurée pour envoyer des informations relatives aux au moins deux nœuds (400) à l'autre dispositif de pont (200).
